# FASCICULE DE BREVET EUROPEEN

(11) **EP 2 618 949 B1**
(45) Date de publication et mention de la délivrance du brevet: **17.09.2014**
(21) Numéro de dépôt: 11752285.4
(22) Date de dépôt: 25.07.2011
(51) Int. Cl.: B08B 3/02, B08B 9/093

(54) **DISPOSITIF ET PROCÉDÉ POUR LAVER DES SURFACES INTERNES D'UN RESRVOIR**
VORRICHTUNG UND VERFAHREN ZUM WASCHEN EINES TANKS
DEVICE AND PROCESS FOR WASHING THE INTERIOR SURFACES OF A TANK

(30) Priorité: 27.07.2010 FR 1056162
(43) Date de publication de la demande: 31.07.2013
(73) Titulaire: Guerin, Maurice, 69300 Caluire Et Cuire (FR); Fallavier, Maurice, 01480 Jassans Riottier (FR)
(72) Inventeur: Guerin, Maurice, 69300 Caluire Et Cuire (FR); Fallavier, Maurice, 01480 Jassans Riottier (FR)
(74) Mandataire: Chevalier, Renaud Philippe
(86) Numéro de dépôt international: PCT/FR2011/051784
(87) Numéro de publication internationale: WO 2012/022881

(56) Documents cités:
- FR-A1- 2 938 222
- US-A- 3 534 746

## Description

La présente invention concerne un dispositif et un procédé pour laver des surfaces internes d'une enceinte.

La présente invention trouve notamment application dans le domaine de la désinfection des enceintes de stockage de denrées périssables telles que des viandes. De telles enceintes de stockage peuvent être formées par des remorques de véhicules industriels ou par des containers frigorifiques.

Un dispositif de l'art antérieur comprend un comprenant un chariot équipé de roues pour rouler dans l'enceinte et d'une tête de buse qui est rotative de façon à projeter en direction des surfaces internes un mélange liquide à base d'eau et de détergent. L'eau provient généralement d'un circuit d'adduction d'eau fixe et le détergent est stocké dand un réservoir fixe placé près de l'enceinte.

Cependant, la buse rotative a un débit et une vitesse de rotation limités, ce qui impose une lente vitesse de déplacement du chariot à l'intérieur de l'enceinte pour désinfecter toute la superficie des surfaces interenes. Un cycle de lavage d'une remorque de véhicule industriel par un tel dispositif dure environ 40 min et nécessite un volume d'eau d'environ 350 L et un volume de détergent d'environ 5 L. Un tel cycle de lavage s'avère donc long, dispendieux et peu compatible avec les normes environnementales actuelles.

L'invention concerne aussi un procédé de mise en oeuvre du dispositif de la revendication 1, selon la revendication 11.

Par ailleurs, FR2938222A1 divulgue un chariot de nettoyage utilisant un détergent moussant. D'autre part, US3534746A divulgue un dispositif pour laver des surfaces internes d'une enceinte selon le préambule de la revendication 1, le dispositif comprenant un chariot qui comporte :
- des premières roues pour rouler dans l'enceinte ;
- un réservoir de liquide de lavage ;
- un premier cadre qui est formé par des premiers tubes ;
- des buses qui sont agencées sur la périphérie du premier cadre de façon à projeter vers l'extérieur du premier cadre en direction des surfaces internes ; et
- un deuxième cadre formé par des deuxièmes tubes qui s'étendent à proximité des premiers tubes et qui présentent plusieurs orifices de sortie répartis sur la périphérie du deuxième cadre.

Un objet de la présente invention est de résoudre, en tout ou partie, les problèmes mentionnés ci-avant.

A cet effet, l'invention a pour objet un dispositif, pour laver des surfaces internes d'une enceinte telle qu'une remorque de véhicule industriel ou un container selon la revendication 1 le dispositif comprenant un chariot qui comporte :
- des premières roues pour rouler dans l'enceinte ;
- un réservoir de liquide de lavage ;
- un organe de dosage présentant au moins une première ouverture en communication de fluide avec le réservoir de liquide de lavage, au moins une deuxième ouverture pour recevoir de l'eau et une chambre pour mélanger le liquide de lavage dans l'eau de façon à former un mélange de lavage;
- un premier cadre qui est formé par des premiers tubes et qui présente au moins une entrée en communication de fluide avec l'organe de dosage ;
- des buses qui sont agencées sur la périphérie du premier cadre de façon à projeter vers l'extérieur du premier cadre en direction des surfaces internes ;
- un deuxième cadre formé par des deuxièmes tubes qui s'étendent à proximité des premiers tubes et qui présentent plusieurs orifices de sortie répartis sur la périphérie du deuxième cadre ; et
- des moyens pour canaliser de l'air comprimé entre chaque orifice de sortie et une buse respective de façon à transformer le mélange de lavage en mousse.

En d'autres termes, un dispositif conforme à l'invention comprend un réservoir de liquide de lavage embarqué sur le chariot, ainsi qu'un cadre répartissant de l'air comprimé au niveau des buses.

Ainsi, un dispositif conforme à l'invention permet de générer et projeter une mousse à partir du mélange d'eau et de liquide de lavage. La mousse offre au liquide de lavage une grande interface avec les surfaces internes, ce qui accélère leur désinfection. De plus, le réservoir de liquide de lavage est embarqué sur le chariot, ce qui minimise la longueur de tuyau nécessaire, donc le volume de liquide de lavage perdu après un cycle de lavage. Par exemple, un cycle de lavage d'une remorque de véhicule industriel effectué par un dispositif conforme à l'invention dure environ 8 min et nécessite un volume d'eau d'environ 120 L et un volume de détergent d'environ 0,5 L.

Selon un mode de réalisation, l'organe de dosage est conçu pour aspirer le liquide de lavage par effet Venturi au moyen d'un flux d'eau.

Ainsi, un tel dispositif ne nécessite pas de pompe spécifique pour le liquide de lavage, ce qui réduit le coût et le poids de ce dispositif.

Selon un mode de réalisation, le premier cadre et le deuxième cadre sont substantiellement en forme de rectangles juxtaposés et s'étendant dans des plans sécants, de préférence perpendiculaires, au sol.

Ainsi, un tel dispositif est adapté pour laver et désinfecter les surfaces internes d'une enceinte parallélépipédique comme une remorque de camion.

Selon un mode de réalisation, le chariot comporte en outre :
- un troisième cadre formé par des troisièmes tubes qui s'étendent à proximité des premiers tubes ;
- des buses de rinçage qui sont agencées sur la périphérie du troisième cadre de façon à projeter vers l'extérieur du troisième cadre en direction des surfaces internes, le nombre de buses ou le nombre de buses de rinçage étant compris de préférence entre 8 et 40, de préférence encore entre 16 et 32 ; et
- des moyens pour alimenter en eau les buses de rinçage.

Ainsi, un tel dispositif permet d'optimiser indépendamment les paramètres de projection de la mousse de lavage et de l'eau de rinçage respectivement par les buses et par les buses de rinçage. Par ailleurs, les nombres de buses précités permettent de couvrir rapidement et complètement les surfaces internes de mousse.

Selon un mode de réalisation, l'un au moins du premier cadre et du troisième cadre a un tube qui est situé près des premières roues et qui est conçu pour être alimenté en fluide indépendamment des autres tubes dudit premier ou troisième cadre.

Ainsi, un tel dispositif permet de laver uniquement le sol de l'enceinte, ce qui permet de réaliser un cycle de lavage très court et peu consommateur d'eau et de liquide de lavage.

Selon un mode de réalisation, le chariot comporte en outre un actionneur conçu pour entraîner tout ou partie des premières roues.

Ainsi, un tel dispositif avec son chariot automoteur n'impose pas l'entrée d'un opérateur dans l'enceinte, ce qui limite les risques sanitaires.

Selon un mode de réalisation, le chariot comporte en outre des éléments de guidage, de préférence des roues, qui s'étendent sur des parties latérales opposées du chariot et qui dépassent latéralement des premier et deuxième cadres de façon à toucher des surfaces internes respectives qui s'étendent à partir du sol.

Ainsi, un tel dispositif reste à distance constante des surfaces internes, ce qui assure leur désinfection uniforme.

Selon un mode de réalisation, le dispositif comprend en outre une table de positionnement qui comporte :
- des deuxièmes roues pour rouler près de l'enceinte ;
- un compresseur d'air connecté au deuxième cadre ;
- un plateau conçu pour supporter le chariot ; et
- des moyens pour positionner le chariot à hauteur du sol de l'enceinte ;
- un treuil conçu pour tracter le chariot, le treuil étant de préférence actionnable par une énergie électrique ou par une énergie hydraulique.

Ainsi, un tel dispositif facilite la mise en place du chariot de lavage à l'intérieur de l'enceinte, en s'adaptant à des hauteurs de sol variables selon les enceintes.

Selon un mode de réalisation, le treuil forme un enrouleur pour des tuyaux reliant le chariot et la table de positionnement.

Ainsi, le treuil et l'enrouleur sont formés par une seule et même pièce ; une telle table de positionnement présente donc un poids et un coût réduits.

Selon un mode de réalisation, la table de positionnement comporte en outre :
- un réservoir d'eau dont le volume est par exemple compris entre 80 L et 300 L ; et
- une motopompe comprenant une entrée connectée au réservoir d'eau et une sortie connectée à l'organe de dosage.

Ainsi, un tel dispositif est autonome, car il ne nécessite pas de raccordement à un circuit d'adduction d'eau externe.

Par ailleurs, la présente invention a pour objet un procédé, pour laver des surfaces internes d'une enceinte telle qu'une remorque de véhicule industriel ou un container, le procédé mettant en oeuvre un dispositif tel que précédemment exposé, le procédé comprenant les étapes :
a) placer le chariot à une première extrémité de l'enceinte ;
b) alimenter l'organe de dosage en liquide de lavage et en eau pour mélanger le liquide de lavage dans l'eau de façon à former un mélange de lavage ;
c) simultanément à l'étape b), alimenter le deuxième cadre en air comprimé de façon à transformer le mélange de lavage en mousse ;
d) simultanément à l'étape c), déplacer le chariot, de préférence à vitesse constante, jusqu'à une deuxième extrémité de l'enceinte de sorte que les buses projettent la mousse sur les surfaces internes ;
e) lorsque le chariot a atteint la deuxième extrémité, arrêter d'alimenter l'organe de dosage et le deuxième cadre ;
f) replacer le chariot à la première extrémité de l'enceinte ;
g) alimenter les buses en eau ; et
h) simultanément à l'étape g), déplacer le chariot, de préférence
à vitesse constante, jusqu'à la deuxième extrémité de sorte que les buses projettent de l'eau rinçant les surfaces internes.

La présente invention sera bien comprise et ses avantages ressortiront aussi à la lumière de la description qui va suivre, qui est donnée uniquement à titre d'exemple non limitatif et qui est faite en référence aux dessins annexés, dans lesquels :
- la figure 1 est une vue de côté schématique d'un dispositif conforme à l'invention, dans une configuration initiale ;
- la figure 2 est une vue de face schématique du dispositif de la figure 1 ;
- la figure 3 est une représentation schématique d'une partie du dispositif de la figure 1 ; et
- la figure 4 est une vue en perspective d'une partie du dispositif de la figure 1, dans une configuration de lavage.

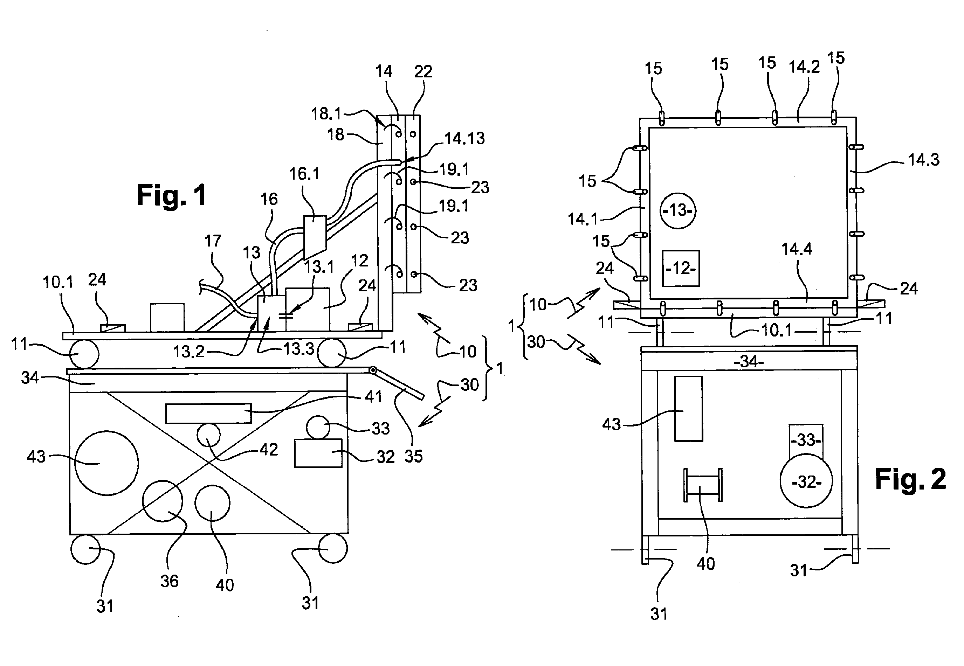

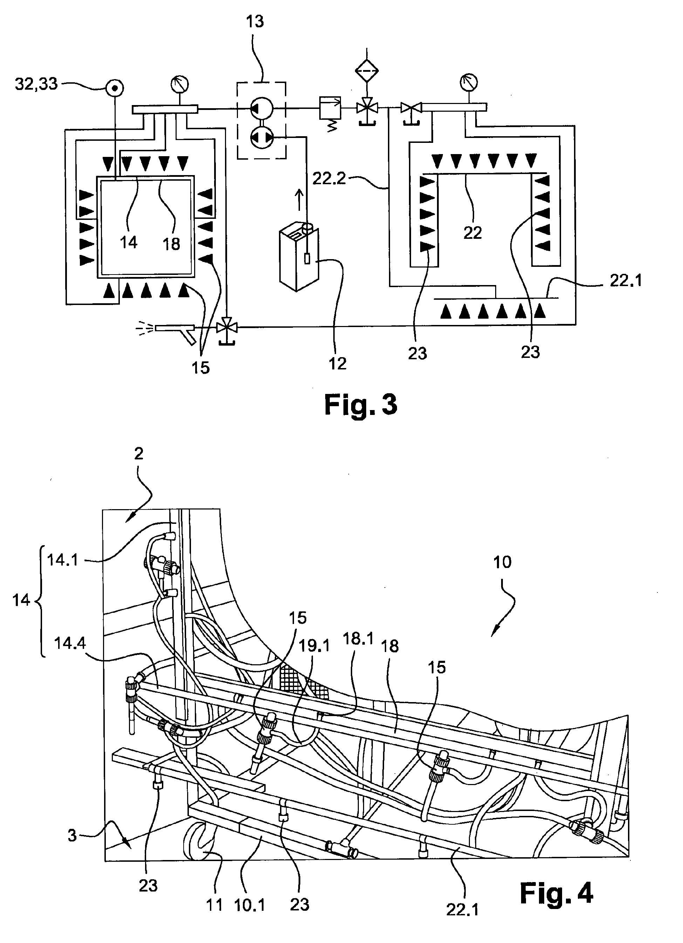

La figure 1 illustre un dispositif 1 pour laver des surfaces internes d'une enceinte formée par une remorque de camion, telles qu'une paroi 2 et un sol 3 visibles à la figure 4. Le dispositif 1 comprend un chariot 10 qui comporte un bâti 10.1 et quatre premières roues 11 pour rouler dans l'enceinte sur le sol 3.

Le chariot 10 comporte en outre un réservoir de liquide de lavage 12, un organe de dosage 13, un premier cadre 14 et seize buses 15 qui sont agencées sur la périphérie du premier cadre 14 de façon à projeter vers l'extérieur du premier cadre 14 en direction des surfaces internes telles que la paroi 2 et le sol 3. Dans l'exemple des figures, les buses 15 sont orientables manuellement pour adapter la projection à un type d'enceinte déterminé.

Dans la présente demande, le terme « liquide » désigne tout produit comprenant une phase liquide. Le liquide de lavage est sélectionné pour ses propriétés lavantes et/ou désinfectantes. Il peut s'agir par exemple d'un produit détergent.

Dans la présente demande, le terme « buse » désigne un moyen de projection à distance d'un produit. Par exemple, une buse peut être formée par un composant spécifique, comme le montre la figure 4

Le premier cadre 14 est formé par quatre premiers tubes 14.1, 14.2, 14.3 et 14.4 qui sont solidarisés entre eux de sorte que le premier cadre 14 est substantiellement en forme de rectangle s'étendant dans un plan perpendiculaire au sol 3. Chaque premier tube 14.1, 14.2, 14.3 et 14.4 porte quatre des seize buses 15. L'écartement entre deux buses 15 successives est déterminé de sorte que les surfaces internes soient intégralement couvertes de mousse.

Le premier cadre 14 présente au moins une entrée 14.13 qui est en communication de fluide avec l'organe de dosage 13 par l'intermédiaire d'un tuyau d'alimentation 16 et d'un boîtier de vannes 16.1 à commandes manuelles et/ou électriques.

L'organe de dosage 13 présente une première ouverture 13.1 raccordée au réservoir de liquide de lavage 12, et une deuxième ouverture 13.2 pour recevoir un flux d'eau par l'intermédiaire d'un tuyau d'eau 17. L'organe de dosage 13 présente en outre une chambre 13.3 pour mélanger le liquide de lavage dans l'eau de façon à former un mélange de lavage.

Dans la présente demande, les verbes « raccorder», « connecter », « alimenter » et leurs dérivés se rapportent à la communication de fluide, c'est-à-dire à l'écoulement de liquide, entre deux éléments distants. Le fluide peut comprendre un liquide et/ou un gaz. La communication de fluide peut être réalisée au moyen d'un lien direct ou indirect, c'est-à-dire par l'intermédiaire d'aucun, d'un ou de plusieurs composant(s). Par ailleurs, dans la présente demande, les termes « amont » et « aval » font référence au sens d'écoulement du produit liquide dans un dispositif conforme à l'invention, depuis une source telle qu'un réservoir jusqu'aux buses.

Le chariot 10 comporte en outre un deuxième cadre 18 formé par des deuxièmes tubes qui s'étendent à proximité des premiers tubes 14.1 à 14.4. Les deuxièmes tubes présentent plusieurs orifices de sortie, dont celui désigné à la figure 1 par la référence 18.1, qui sont répartis sur la périphérie du deuxième cadre 18. Le deuxième cadre 18 a pour fonction de canaliser de l'air comprimé à ajouter au mélange de lavage de façon à le transformer en mousse.

Le deuxième cadre 18 est substantiellement en forme de rectangle qui s'étend dans un plan perpendiculaire au sol 3 de manière juxtaposée et parallèle au premier cadre 14. Dans la représentation de la figure 1, le premier cadre 14 et le deuxième-cadre 18 sont accolés ; en fait, comme le montre la figure 4, le premier cadre 14 et le deuxième cadre 18 peuvent être distants d'une dizaine de centimètres.

Le chariot 10 a des moyens pour canaliser de l'air comprimé entre chaque orifice de sortie et une buse 15 respective. Dans l'exemple des figures, les moyens pour canaliser de l'air comprimé sont formés par des tuyaux de jonction, dont ceux désignés à la figure 1 par la référence 19.1, qui raccordent le deuxième cadre 18 au premier cadre 14 ou directement aux buses 15 respectives, comme dans l'exemple de la figure 4. Ainsi, à chaque sortie du premier cadre 14 ou à chaque buse 15, le mélange de lavage peut être transformé en mousse.

L'organe de dosage 13 est conçu pour aspirer le liquide de lavage par effet Venturi au moyen d'un flux d'eau. Les débits relatifs d'eau et de liquide de lavage peuvent être réglés en fonction du degré de lavage ou de désinfection recherché. Par exemple, le débit d'eau à l'entrée de l'organe de dosage 13 peut être ajusté pour augmenter ou diminuer le débit de mélange de lavage. Pour varier la concentration en liquide de lavage dans le mélange de lavage, l'opérateur peut interchanger un composant de l'organe de dosage 13.

Par ailleurs, le chariot 10 a un troisième cadre 22 formé par des troisièmes tubes qui s'étendent à proximité des premiers tubes 14.1 à 14.4. Comme le deuxième cadre 18, le troisième cadre 22 est substantiellement en forme de rectangle juxtaposé et parallèle au premier cadre 14. Les premiers tubes 14.1, 14.2, 14.3 et 14.4, les deuxièmes tubes et les troisièmes tubes sont réalisés en un acier inoxydable.

La périphérie du troisième cadre 22 est équipée de seize buses de rinçage 23 qui sont agencées de façon à projeter de l'eau vers l'extérieur du troisième cadre 22 en direction des surfaces internes de l'enceinte. Le dispositif 1 comprend des moyens pour alimenter en eau les buses de rinçage 23 tels que des tuyaux et des vannes non représentés. Les buses de rincage 23 ont pour fonction de projeter de l'eau sur les surfaces internes pour en ôter la mousse préalablement projetée par les buses 15. L'écartement entre deux buses 23 successives est déterminé de sorte que les surfaces internes soient intégralement rincées.

Comme le montre la figure 3, dans le troisième cadre 22, le tube inférieur 22.1, qui est situé près des premières roues 11, est conçu pour être alimenté en fluide indépendamment des autres tubes du troisième cadre 22. A cet effet, le tube inférieur 22.1 est alimenté par un tuyau indépendant 22.2.

Le chariot 10 porte des roues de guidage 24 qui s'étendent sur des parties latérales opposées du chariot 10 et qui dépassent latéralement du premier cadre 14 et du deuxième cadre 18 de façon à toucher des surfaces internes respectives 2 qui s'étendent à partir du sol 3.

Le dispositif 1 comprend en outre une table de positionnement30 pour faciliter la mise en place du chariot 10 dans l'enceinte. La table de positionnement 30 comporte des deuxièmes roues 31 pour rouler près de l'enceinte, en l'occurrence pour approcher le chariot 10 de la remorque du camion. La table de positionnement 30 comporte aussi un compresseur d'air 32 et un accumulateur d'air comprimé 33, qui sont connectés au deuxième cadre 18, par l'intermédiaire d'un tuyau et d'une vanne non représentés, de façon à alimenter le deuxième cadre 18 en air comprimé.

La table de positionnement 30 a un plateau 34 qui est conçu pour supporter le chariot 10. Dans le prolongement du plateau 34, la table de positionnement 30 comprend une rampe 35 qui pivote par rapport au plateau 34 et autour d'un axe horizontal. Pour pivoter la rampe 35, la table de positionnement 30 comporte un actionneur 36 qui est formé d'un moteur électrique. La rampe 35 est conçue pour supporter le chariot 10 en roulage et pour le guider, en montée ou en descente, vers le sol 3. La rampe 35 et l'actionneur 36 forment des moyens pour positionner le chariot 10 à hauteur du sol 3 de l'enceinte. La table de positionnement 30 s'adapte ainsi à des hauteurs de sol variables selon les enceintes ; par exemple, deux modèles de remorques différents auront deux hauteurs de sol différentes.

La table de positionnement 30 comporte en outre un treuil 40 qui comprend un câble non représenté attaché au chariot 10. Le treuil 40 est ici actionnable par énergie électrique. Le treuil 40 a pour fonction de tracter le chariot 10, de façon à le déplacer le long de l'enceinte.

De plus, la table de positionnement 30 comporte un réservoir d'eau 41 et une motopompe 42. La motopompe 42 comprend une entrée connectée au réservoir d'eau 41 et une sortie connectée à l'organe de dosage 13, de façon à alimenter l'organe de dosage 13, par l'intermédiaire d'un tuyau et d'une vanne non représentés. La motopompe 42 est actionnable par énergie électrique. Dans l'exemple des figures, le réservoir d'eau 41 a un volume de 250 L.

La table de positionnement 30 est équipée d'un enrouleur 43 pour dérouler et rembobiner les divers tuyaux pneumatiques ou hydrauliques reliant la table de positionnement 30 au chariot 10, respectivement lorsque le chariot 10 s'éloigne ou se rapproche de la table de positionnement 30.

En fonctionnement, le dispositif 1 est mis en oeuvre selon un procédé conforme à l'invention, qui comprend les étapes :
a) Placer le chariot 10 à une première extrémité de l'enceinte ; cette mise en place peut être facilitée par la table de positionnement 10. La première extrémité est ici le fond de la remorque du camion, à l'opposé des portes. Cette étape est effectuée par un opérateur qui pousse le chariot 10 au fond de l'enceinte.
b) Alimenter l'organe de dosage 13 en liquide de lavage et en eau pour mélanger le liquide de lavage dans l'eau de façon à former un mélange de lavage.
c) Simultanément à l'étape b), alimenter le deuxième cadre 18 en air comprimé de façon à transformer le mélange de lavage en mousse.
d) Simultanément à l'étape c), déplacer le chariot 10, de préférence à vitesse constante, jusqu'à une deuxième extrémité de l'enceinte, en l'occurrence jusqu'aux portes de la remorque du camion, de sorte que les buses 15 projettent la mousse sur les surfaces internes telles que la paroi 2 et le sol 3.
e) Lorsque le chariot 10 a atteint la deuxième extrémité, arrêter d'alimenter l'organe de dosage 13 et le deuxième cadre 18. Les surfaces internes sont alors couvertes de mousse.
f) Replacer le chariot 10 à la première extrémité de l'enceinte. Ce replacement est effectué à l'aide du treuil 40.
g) Alimenter les buses de rinçage 23 en eau. Cette alimentation peut démarrer après une durée déterminée de sorte que l'action désinfectante ou lavante de la mousse se produise.
h) Simultanément à l'étape g), déplacer le chariot 10, de préférence à vitesse constante, jusqu'à la deuxième extrémité, de sorte que les buses de rinçage 23 projettent de l'eau rinçant les surfaces internes pour en ôter la mousse.

Dans une enceinte parallélépipédique, le chariot 10 peut se déplacer en translation dans la remorque du camion. Avantageusement, le chariot 10 a une vitesse de déplacement lors de l'étape d) pour le lavage qui est supérieure à sa vitesse de déplacement lors de l'étape h) pour le rinçage, ce qui assure un rinçage efficace. Typiquement, les vitesses de déplacement du chariot 10 sont de l'ordre de 30 m/min et 15 m/min respectivement lors des étapes d) et h).

Un cycle de lavage au moyen d'un procédé et d'un dispositif conformes à l'invention dure environ 8 min, dont 30 s de lavage, 5 min d'attente pour l'action de la mousse, et 1 min de rinçage.

Selon d'autres modes de réalisation non représentés, pris isolément ou selon toute combinaison techniquement admissible :
- Les différents tubes d'un cadre peuvent être en communication de fluide entre eux ou disjoints.
- Le chariot est équipé d'un actionneur qui est conçu pour entraîner en rotation tout ou partie des premières roues, de façon à déplacer le chariot dans l'enceinte, à la place de l'opérateur.
- Alternativement à la rampe 35, les moyens de positionnement du chariot que comprend la table de positionnement sont formés des bras élévateurs motorisés qui déplacent le plateau suivant la direction verticale.
- Alternativement à un moteur électrique, l'actionneur 36 est formé d'un vérin hydraulique ou pneumatique, ou encore d'un levier manuel.
- L'enrouleur remplit la fonction de treuil, ou inversement. L'enrouleur tracte le chariot le long de l'enceinte par l'intermédiaire des tuyaux qui relient le chariot à la table de positionnement. A cet effet, l'enrouleur est mis en rotation par un actionneur à énergie électrique.
- Dans le procédé de lavage, les première et deuxième extrémités peuvent être inversées.
- Un dispositif conforme à l'invention peut en outre comprend des moyens de chauffage adaptés pour chauffer l'eau avant son passage dans les buses. De tels moyens de chauffage peuvent par exemple être formés d'une résistance électrique gainée. De tels moyens de chauffage peuvent être soit embarqués sur le chariot, soit placés à distance du chariot.

## Revendications

1. Dispositif (1), pour laver des surfaces internes (2, 3) d'une enceinte telle qu'une remorque de véhicule industriel ou un container, le dispositif (1) comprenant un chariot (10) qui comporte :
- des premières roues (11) pour rouler dans l'enceinte ;
- un réservoir de liquide de lavage (12) ;
- un premier cadre (14) qui est formé par des premiers tubes (14.1, 14.2, 14.3, 14.4) ;
- des buses (15) qui sont agencées sur la périphérie du premier cadre (14) de façon à projeter vers l'extérieur du premier cadre (14) en direction des surfaces internes (2, 3) ; et
- un deuxième cadre (18) formé par des deuxièmes tubes qui s'étendent à proximité des premiers tubes (14.1, 14.2, 14.3, 14.4) et qui présentent plusieurs orifices de sortie (18.1) répartis sur la périphérie du deuxième cadre (18) ;
le dispositif (1) étant **caractérisé en ce qu'**il comprend en outre :
- un organe de dosage (13) présentant au moins une première ouverture (13.1) en communication de fluide avec le réservoir de liquide de lavage (12), au moins une deuxième ouverture (13.2) pour recevoir de l'eau, et une chambre (13.3) pour mélanger le liquide de lavage dans l'eau de façon à former un mélange de lavage, le premier cadre (14) présentant au moins une entrée (14.13) en communication de fluide avec l'organe de dosage (13) ; et
- des moyens (19.1) pour canaliser de l'air comprimé entre chaque orifice de sortie (18.1) et une buse (15) respective de façon à transformer le mélange de lavage en mousse.

2. Dispositif (1) selon la revendication 1, dans lequel l'organe de dosage (13) est conçu pour aspirer le liquide de lavage par effet Venturi au moyen d'un flux d'eau.

3. Dispositif (1) selon l'une des revendications précédentes, dans lequel le premier cadre (14) et le deuxième cadre (18) sont substantiellement en forme de rectangles juxtaposés et s'étendant dans des plans sécants, de préférence perpendiculaires, au sol (3).

4. Dispositif (1) selon l'une des revendications précédentes, dans lequel le chariot (10) comporte en outre :
- un troisième cadre (22) formé par des troisièmes tubes qui s'étendent à proximité des premiers tubes (14.1, 14.2, 14.3, 14.4) ;
- des buses de rinçage (23) qui sont agencées sur la périphérie du troisième cadre (22) de façon à projeter vers l'extérieur du troisième cadre (22) en direction des surfaces internes (2, 3), le nombre de buses (15) ou le nombre de buses de rinçage (23) étant compris de préférence entre 8 et 40 ; et
- des moyens pour alimenter en eau les buses de rinçage (23).

5. Dispositif (1) selon l'une des revendications précédentes, dans lequel l'un au moins du premier cadre (14) et du troisième cadre (22) a un tube (22.2) qui est situé près des premières roues (11) et qui est conçu pour être alimenté en fluide indépendamment des autres tubes dudit premier (14) ou troisième cadre (22).

6. Dispositif (1) selon l'une des revendications précédentes, dans lequel le chariot (10) comporte en outre un actionneur conçu pour entraîner tout ou partie des premières roues (11).

7. Dispositif (1) selon l'une des revendications précédentes, dans lequel le chariot (10) comporte en outre des éléments de guidage (24), de préférence des roues, qui s'étendent sur des parties latérales opposées du chariot (10) et qui dépassent latéralement des premier (14) et deuxième cadres (18) de façon à toucher des surfaces internes (2) respectives qui s'étendent à partir du sol (3).

8. Dispositif (1) selon l'une des revendications précédentes, comprenant en outre une table de positionnement (30) qui comporte :
- des deuxièmes roues (31) pour rouler près de l'enceinte ;
- un compresseur d'air (32) connecté au deuxième cadre (18) ;
- un plateau (34) conçu pour supporter le chariot (10) ; et
- des moyens (35, 36) pour positionner le chariot (10) à hauteur du sol (3) de l'enceinte ;
- un treuil (40) conçu pour tracter le chariot (10), le treuil (40) étant de préférence actionnable par une énergie électrique ou par une énergie hydraulique.

9. Dispositif (1) selon la revendication 8, dans lequel le treuil (40) forme un enrouleur (43) pour des tuyaux reliant le chariot (10) et la table de positionnement (30).

10. Dispositif (1) selon la revendication 8 ou 9, dans lequel la table de positionnement (30) comporte en outre :
- un réservoir d'eau (41) dont le volume est par exemple compris entre 80 L et 300 L ; et
- une motopompe (42) comprenant une entrée connectée au réservoir d'eau (41) et une sortie connectée à l'organe de dosage (13).

11. Procédé, pour laver des surfaces internes (2, 3) d'une enceinte telle qu'une remorque de véhicule industriel ou un container, le procédé mettant en oeuvre un dispositif (1) selon l'une des revendications précédentes, le procédé comprenant les étapes :
a) placer le chariot (10) à une première extrémité de l'enceinte ;
b) alimenter l'organe de dosage (13) en liquide de lavage et en eau pour mélanger le liquide de lavage dans l'eau de façon à former un mélange de lavage ;
c) simultanément à l'étape b), alimenter le deuxième cadre (18) en air comprimé de façon à transformer le mélange de lavage en mousse ;
d) simultanément à l'étape c), déplacer le chariot (10), de préférence à vitesse constante, jusqu'à une deuxième extrémité de l'enceinte de sorte que les buses (15) projettent la mousse sur les surfaces internes (2, 3) ;
e) lorsque le chariot (10) a atteint la deuxième extrémité, arrêter d'alimenter l'organe de dosage (13) et le deuxième cadre (18) ;
f) replacer le chariot (10) à la première extrémité de l'enceinte ;
g) alimenter les buses (15) en eau ; et
h) simultanément à l'étape g), déplacer le chariot (10), de préférence à vitesse constante, jusqu'à la deuxième extrémité de sorte que les buses (15) projettent de l'eau rinçant les surfaces internes (2, 3).

## Patentansprüche

1. Vorrichtung (1) zum Waschen interner Oberflächen (2, 3) eines Einschlusses, wie zum Beispiel eines Lastkraftwagenanhängers oder eines Containers, wobei die Vorrichtung (1) einen Wagen (10) aufweist, der Folgendes aufweist:
- erste Räder (11) zum Fahren in dem Einschluss,
- einen Waschflüssigkeitstank (12),
- einen ersten Rahmen (14), der aus ersten Rohren (14.1, 14.2, 14.3, 14.4) ausgebildet ist,
- Düsen (15), die auf dem Umfang des ersten Rahmens (14) derart angeordnet sind, dass sie vom ersten Rahmen (14) in Richtung der internen Oberflächen (2, 3) spritzen, und
- einen zweiten Rahmen (18), der aus zweiten Rohren ausgebildet ist, die sich in der Nähe der ersten Rohre (14.1, 14.2, 14.3, 14.4) erstrecken und mehrere Ausgangsöffnungen (18.1), die auf dem Umfang des zweiten Rahmens (18) verteilt sind, aufweisen,
Vorrichtung (1) **dadurch gekennzeichnet, dass** sie ferner Folgendes aufweist:
- ein Dosierorgan (13), das mindestens eine erste Öffnung (13.1) in Flüssigkeitsverbindung mit dem Waschflüssigkeitstank (12), mindestens eine zweite Öffnung (13.2) zum Aufnehmen des Wassers, und eine Kammer (13.3) zum Mischen der Waschflüssigkeit in dem Wasser derart aufweist, dass ein Waschgemisch gebildet wird, wobei der erste Rahmen (14) mindestens einen Eingang (14.13) in Flüssigkeitsverbindung mit dem Dosierorgan (13) aufweist, und
- Mittel (19.1) zum Kanalisieren von Pressluft zwischen jeder Ausgangsöffnung (18.1) und einer jeweiligen Düse (15) derart, dass das Waschgemisch in Schaum umgewandelt wird.

2. Vorrichtung (1) nach Anspruch 1, bei der das Dosierorgan (13) ausgelegt ist, um die Waschflüssigkeit durch Venturieffekt mittels eines Wasserstroms anzusaugen.

3. Vorrichtung (1) nach einem der vorhergehenden Ansprüche, bei der der erste Rahmen (14) und der zweite Rahmen (18) im Wesentlichen in der Form nebeneinanderliegender Rechtecke sind und sich in Schnittebenen erstrecken, die vorzugsweise zum Boden (3) senkrecht sind.

4. Vorrichtung (1) nach einem der vorhergehenden Ansprüche, bei der der Wagen (10) ferner Folgendes aufweist:
- einen dritten Rahmen (22), der von dritten Rohren ausgebildet wird, die sich in der Nähe der ersten Rohre (14.1, 14.2, 14.3, 14.4) erstrecken,
- Spüldüsen (23), die auf dem Umfang des dritten Rahmens (22) derart angeordnet sind, dass sie von dem dritten Rahmen (22) in Richtung der internen Oberflächen (2, 3) nach außen spritzen, wobei die Anzahl der Düsen (15) oder die Anzahl der Spüldüsen (23) vorzugsweise zwischen 8 und 40 liegt, und
- Mittel zum Versorgen der Spüldüsen (23) mit Wasser.

5. Vorrichtung (1) nach einem der vorhergehenden Ansprüche, bei der der erste Rahmen (14) und/oder der dritte Rahmen (22) ein Rohr (22.2) aufweist/aufweisen, das sich nahe der ersten Räder (11) befindet und ausgelegt ist, um unabhängig von den anderen Rohren des ersten (14) oder dritten Rahmens (22) mit Flüssigkeit versorgt zu werden.

6. Vorrichtung (1) nach einem der vorhergehenden Ansprüche, bei der der Wagen (10) ferner einen Stellantrieb aufweist, der ausgelegt ist, um alle oder einen Teil der ersten Räder (11) anzutreiben.

7. Vorrichtung (1) nach einem der vorhergehenden Ansprüche, bei der der Wagen (10) ferner Führungselemente (24), vorzugsweise Räder aufweist, die sich auf seitlich gegenüberliegenden Teilen des Wagens (10) erstrecken und seitlich von dem ersten (14) und zweiten Rahmen (18) derart überstehen, dass sie jeweilige interne Oberflächen (2), die sich ab dem Boden (3) erstrecken, berühren.

8. Vorrichtung (1) nach einem der vorhergehenden Ansprüche, die ferner einen Positionierungstisch (30) aufweist, der Folgendes aufweist:
- zweite Räder (31), um nahe des Einschlusses zu fahren,
- einen Luftkompressor (32), der an den zweiten Rahmen (18) angeschlossen ist,
- eine Platte (34), die ausgelegt ist, um den Wagen (10) zu tragen, und
- Mittel (35, 36) zum Positionieren des Wagens (10) in der Höhe des Bodens (3) des Einschlusses,
- eine Winde (40), die ausgelegt ist, um den Wagen (10) zu ziehen, wobei die Winde (40) vorzugsweise durch eine elektrische Energie oder durch eine hydraulische Energie betätigt werden kann.

9. Vorrichtung (1) nach Anspruch 8, bei der die Winde (40) eine Haspel (43) für die Schläuche, die den Wagen (10) und den Positionierungstisch (30) verbinden, bildet.

10. Vorrichtung (1) nach Anspruch 8 oder 9, bei der der Positionierungstisch (30) ferner Folgendes aufweist:
- einen Wassertank (41), dessen Inhalt zum Beispiel zwischen 80 und 300 I liegt, und
- eine Motorpumpe (42), die einen Eingang aufweist, der mit dem Wassertank (41) verbunden ist, und einen Ausgang, der mit dem Dosierorgan (13) verbunden ist.

11. Verfahren zum Waschen der internen Oberflächen (2, 3) eines Einschlusses, wie zum Beispiel eines Lastkraftwagenanhängers oder eines Containers, wobei das Verfahren eine Vorrichtung (1) nach einem der vorhergehenden Ansprüche umsetzt, wobei das Verfahren die folgenden Schritte aufweist:
a) Hinstellen des Wagens (10) an einem ersten Ende des Einschlusses,
b) Versorgen des Dosierorgans (13) mit Waschflüssigkeit und Wasser, um die Waschflüssigkeit in dem Wasser derart zu mischen, dass ein Waschgemisch gebildet wird,
c) gleichzeitig mit Schritt b), Versorgen des zweiten Rahmens (18) mit Pressluft derart, dass das Waschgemisch in Schaum umgewandelt wird,
d) gleichzeitig mit Schritt c), Fahren des Wagens (10), vorzugsweise mit konstanter Geschwindigkeit, bis zu einem zweiten Ende des Einschlusses derart, dass die Düsen (15) den Schaum auf die internen Oberflächen (2, 3) spritzen,
e) wenn der Wagen (10) das zweite Ende erreicht hat, Stoppen der Versorgung des Dosierorgans (13) und des zweiten Rahmens (18),
f) Zurückstellen des Wagens (10) an das erste Ende des Einschlusses,
g) Versorgung der Düsen (15) mit Wasser, und
h) gleichzeitig mit Schritt g), Fahren des Wagens (10), vorzugsweise mit konstanter Geschwindigkeit, bis zum zweiten Ende derart, dass die Düsen (15) Wasser, das die internen Oberflächen (2, 3) spült, spritzen.

## Claims

1. A device (1), for washing inner surfaces (2, 3) of an enclosure such as a trailer of an industrial vehicle or a container, the device (1) comprising a carriage (10) which includes:
- first wheels (11) to roll in the enclosure;
- a washing liquid tank (12);
- a first frame (14) which is formed by first tubes (14.1, 14.2, 14.3, 14.4);
- nozzles (15) which are arranged on the periphery of the first frame (14) so as to project towards the outside of the first frame (14) in the direction of the inner surfaces (2, 3); and
- a second frame (18) formed by second tubes which extend in the vicinity of the first tubes (14.1, 14.2, 14.3, 14.4) and which exhibit several outlet orifices (18.1) distributed over the periphery of the second frame (18);
the device (1) being **characterized in that** it further comprises:
- a metering member (13) exhibiting at least a first opening (13.1) in fluid communication with the washing liquid tank (12), at least a second opening (13.2) to receive water, and a chamber (13.3) to mix the washing liquid in the water so as to form a washing mixture, the first frame (14) exhibiting at least one inlet (14.13) in fluid communication with the metering member (13); and
- means (19.1) for channeling compressed air between each outlet orifice (18.1) and a respective nozzle (15) so as to turn the washing mixture into foam.

2. The device (1) according to claim 1, in which the metering member (13) is designed to suck the washing liquid by Venturi effect by means of a water flow.

3. The device (1) according to any of the preceding claims, in which the first frame (14) and the second frame (18) are substantially in the shape of juxtaposed rectangles and extending in planes intersecting, preferably perpendicular to, the ground (3).

4. The device (1) according to any of the preceding claims, in which the carriage (10) further includes:
- a third frame (22) formed by third tubes which extend in the vicinity of the first tubes (14.1, 14.2, 14.3, 14.4);
- rinsing nozzles (23) which are arranged on the periphery of the third frame (22) so as to project towards the outside of the third frame (22) in the direction of the inner surfaces (2, 3), the number of nozzles (15) or the number of rinsing nozzles (23) preferably ranging between 8 and 40; and
- means for supplying the rinsing nozzles (23) with water.

5. The device (1) according to any of the preceding claims, in which at least one of the first frame (14) and the third frame (22) has a tube (22.2) which is located near the first wheels (11) and which is configured to be supplied with fluid independently from the other tubes of said first (14) or third frame (22).

6. The device (1) according to any of the preceding claims, in which the carriage (10) further includes an actuator configured to drive all or part of the first wheels (11).

7. The device (1) according to any of the preceding claims, in which the carriage (10) further includes guiding members (24), preferably wheels, which extend on opposed lateral portions of the carriage (10) and which laterally surpass the first (14) and second frames (18) so as to touch respective inner surfaces (2) which extend from the ground (3).

8. The device (1) according to any of the preceding claims, further comprising a positioning table (30) which includes:
- second wheels (31) to roll near the enclosure;
- an air compressor (32) connected to the second frame (18);
- a platform (34) configured to support the carriage (10); and
- means (35, 36) for positioning the carriage (10) at ground (3) level of the enclosure;
- a winch (40) configured to tow the carriage (10), the winch (40) being preferably activated by electric energy or by hydraulic energy.

9. The device (1) according to claim 8, in which the winch (40) forms a reel (43) for pipes connecting the carriage (10) and the positioning table (30).

10. The device (1) according to claim 8 or 9, in which the positioning table (30) further includes:
- a water tank (41) of which the volume for example ranges between 80 L and 300 L; and
- a motor pump (42) comprising an inlet connected to the water tank (41) and an outlet connected to the metering member (13).

11. A method for washing inner surfaces (2, 3) of an enclosure such as a trailer of an industrial vehicle or a container, the method implementing a device (1) according to any of the preceding claims, the method comprising the steps of:
a) placing the carriage (10) at a first end of the enclosure;
b) supplying the metering member (13) with washing liquid and water in order to mix the washing liquid in the water so as to form a washing mixture;
c) simultaneously with the step b), supplying the second frame (18) with compressed air so as to transform the washing mixture into foam;
d) simultaneously with the step c), moving the carriage (10), preferably at a constant speed, to a second end of the enclosure so that the nozzles (15) project the foam on the inner surfaces (2 , 3);
e) when the carriage (10) has reached the second end, stopping supplying the metering member (13) and the second frame (18);
f) placing the carriage (10) back at the first end of the enclosure;
g) supplying the nozzles (15) with water; and
h) simultaneously with step g), moving the carriage (10), preferably at a constant speed, to the second end so that the nozzles (15) project water rinsing the inner surfaces (2, 3).
